# EUROPEAN PATENT APPLICATION

(11) **EP 4 803 176 A2**
(43) Date of publication of application: **09.09.2026**
(21) Application number: 25223010.7
(22) Date of filing: 12.12.2025
(51) Int. Cl.: B01D 53/04, B01D 53/26, B01J 20/34, F24F 3/14, F24F 8/10, F25B 30/00

(54) **HEAT EXCHANGER INCLUDING ADSORBENT AND MICROWAVE-ENHANCED ADSORBENT REGENERATION THEREOF**

(30) Priority: 20.12.2024 US 202463736919 P
(71) Applicant: Carrier Corporation, Palm Beach Gardens, FL 33418 (US)
(72) Inventor: VAN HASSEL, Bart, Palm Beach Gardens, FL 33418 (US)
(74) Representative: Dehns

(57) **Abstract**

A process for regenerating an adsorbent (56) includes generating microwaves using a microwave generator; and selectively applying the microwaves to the adsorbent (56) located on an exterior heat transfer surface of a heat exchanger (24) to heat and regenerate the adsorbent (56).

## Description

### BACKGROUND

The present disclosure relates to an air-temperature conditioning system and, more particularly, to regeneration of adsorbent in the system.

Adsorbents for moisture, carbon dioxide, volatile organic compounds (VOCs), or a combination thereof may be used with heat exchangers, for example, as used in air temperature conditioning system. After use, the adsorbents may need to be regenerated. A more efficient process for regeneration of adsorbents is desired.

### SUMMARY

According to a first aspect of the invention, there is provided a process for regenerating an adsorbent, comprising generating microwaves using a microwave generator; and selectively applying the microwaves to the adsorbent located on an exterior heat transfer surface of a heat exchanger located in a microwave cavity to heat and regenerate the adsorbent within the microwave cavity.

Optionally, the exterior heat transfer surface of the heat exchanger further includes a microwave absorbing material.

Optionally, the exterior heat transfer surface of the heat exchanger includes a plurality of fins.

Optionally, the microwave cavity further includes a metallic mesh configured to prevent microwaves from propagating outside the microwave cavity.

Optionally, the process further includes using competitive adsorption between adsorbents.

According to a second aspect of the invention, there is provided an air-temperature conditioning system comprising: a heat exchanger including an interior volume configured to flow a working fluid therethrough, an exterior heat transfer surface, and an adsorbent on at least a portion of the exterior heat transfer surface; and a microwave generator.

Optionally, the air-temperature conditioning system further includes a microwave cavity including a metallic mesh configured to prevent microwaves from propagating outside the microwave cavity.

Optionally, the air temperature conditioning system further includes a working fluid line configured to flow the working fluid through the interior volume of the heat exchanger.

Optionally, the heat exchanger further includes a microwave absorbing material on at least a portion of the exterior heat transfer surface.

Optionally, the adsorbent and microwave absorbing material are present as a mixture.

According to a third aspect of the invention, a method of operating the air temperature conditioning system according to the second aspect is provided, the method comprising adsorbing contaminant by the adsorbent by flowing contaminated fluid over the heat exchanger; and after adsorbing contaminant by the adsorbent, desorbing contaminant adsorbed by the adsorbent by applying microwaves generated by the microwave generator to the adsorbent.

Optionally, the method includes repeating the adsorbing and the desorbing.

Optionally, adsorbing contaminant by the adsorbent includes limiting microwaves generated by the microwave generator from being supplied to the heat exchanger.

Optionally, adsorbing contaminant by the adsorbent includes preventing microwaves generated by the microwave generator from being supplied to the heat exchanger.

Optionally, the air-temperature conditioning system further includes a waveguide; and the method further includes using the waveguide to prevent the microwaves generated by the microwave generator from being supplied to the heat exchanger.

Optionally, a frequency of the adsorbing and the desorbing is based on impurity amount, adsorbent amount, adsorbent capacity, the time to regenerate the adsorbent with microwaves, or a combination thereof.

According to a fourth aspect of the invention, a heat exchanger is provided, comprising: an interior volume configured to flow a working fluid therethrough; an exterior heat transfer surface; an adsorbent on at least a portion of the exterior heat transfer surface; and a microwave absorbing material on at least a portion of the exterior heat transfer surface.

Optionally, the exterior heat transfer surface of the heat exchanger includes a plurality of fins.

Optionally, the adsorbent and microwave absorbing material are present as a mixture.

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. Certain exemplary embodiments will now be described in greater detail by way of example only and with reference to the accompanying drawings in which:
FIG. 1 is a schematic of an air temperature conditioning system utilizing a heat exchanger;
FIG. 2 is a perspective view of the heat exchanger;
FIG. 3 is a perspective view of the heat exchanger;
FIG. 4 is a perspective view of the heat exchanger; and
FIG. 5 is a perspective view of an air-temperature conditioning system.

### DETAILED DESCRIPTION

The present disclosure relates to the regeneration of adsorbent on heat transfer surfaces of heat exchangers. Such heat exchangers may be used in air-temperature conditioning systems, and/or may further be used in refrigeration and/or air conditioning systems. Examples may include air temperature conditioning system suitable for use in conditioning air to be supplied to a climate controlled comfort zone within a residence, office building, hospital, school, restaurant or other facility. The heat exchanger can be a component in a dedicated outdoor air system (DOAS) to adsorb unwanted components in the air.

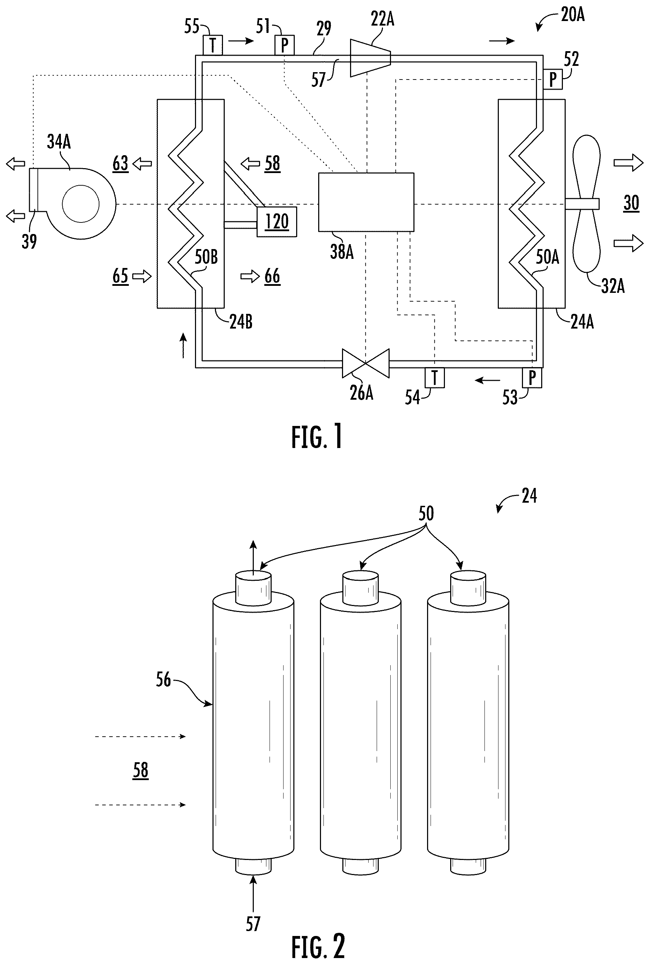

FIG. 1 is a schematic view of an exemplary air temperature conditioning system 20A that includes a compressor 22A, a first heat exchanger 24A, an expansion device 26A, and a second heat exchanger 24B. The compressor 22A could include one or more variable speed compressors or one or more non-variable speed compressors. Refrigerant, also referred to herein as working fluid, 57 in a suction line 29 is compressed in the compressor 22A, and exits the compressor 22A at a high pressure, high temperature, and a high enthalpy, and flows to the first heat exchanger 24A. Although only a single compressor 22A is shown, it is understood that multiple compressors could be used.

In a cooling operation, the first heat exchanger 24A operates as a condenser that rejects heat. In the first heat exchanger 24A, refrigerant can flow through one or more tubes 50A and reject heat to air that is drawn over the tube(s) 50A by a fan 32A. In the first heat exchanger 24A, refrigerant is condensed into a liquid that exits the first heat exchanger 24A at a low enthalpy and a high pressure. The heat rejection medium could be ambient air 30 or could be water in a shell and tube arrangement, for example.

The refrigerant flows from the first heat exchanger 24A to the expansion device 26A, such as a thermostatic expansion valve or electronic expansion valve. The expansion device 26A reduces the refrigerant to a low pressure and temperature. After expansion, the refrigerant flows through the second heat exchanger 24B, which operates as an evaporator that accepts heat. A blower fan 34A (which may be a centrifugal fan) can draw contaminated air 58 through the second heat exchanger 24B and over one or more refrigerant tube(s) 50B. The refrigerant flowing through the refrigerant tubes 50B can accept heat from air, and exit the second heat exchanger 24B at a high enthalpy and a low pressure. The refrigerant then flows to the compressor 22A, completing its refrigeration cycle. The cooling medium could be air or could be water in a shell and tube arrangement, for example.

A controller 38A controls operation of each of the compressor 22A, fan 32A, and fan 34A and operates each of these components during a heat exchange mode when the air temperature conditioning system 20A is running. In the heat exchange mode, the air temperature conditioning system 20A is operated to cool and dehumidify contaminated air 58. In embodiments utilizing an electronic expansion valve for the expansion device 26 A, the controller 38A could also control the expansion device 26A, and operate the expansion device 26A in the heat exchange mode.

Dehumidification can be achieved through adsorption. Second heat exchanger 24B includes an adsorbent on at least a portion of an exterior heat transfer surface thereof. The adsorbent may adsorb moisture, carbon dioxide, VOCs, or a combination thereof from contaminated air 58 to provide processed air 63.

At least a portion 65 of the processed air can be supplied to the second heat exchanger 24B including adsorbent to be regenerated. Microwaves can be supplied to the second heat exchanger 24B including adsorbent to be regenerated. A waveguide 120 can direct electromagnetic waves from a microwave source to the second heat exchanger 24B including adsorbent to be regenerated. The adsorbent absorbing microwave radiation can cause desorption of contaminants from the second heat exchanger 24B. Flow 66 of fluid, e.g., air, contains desorbed contaminants.

A first section of the second heat exchanger 24B is under microwave radiation during regeneration while a second section of the second heat exchanger 24B is adsorbing impurities out of the air. The waveguide 120 can direct microwaves in a cyclical fashion between the sections of the second heat exchanger 24B. For example, the waveguide can direct microwave energy to the second section of the second heat exchanger 24B for regeneration while the first section of the second heat exchanger 24B adsorbs the impurities in a cyclical fashion.

Optionally, an auxiliary heating device 39 (e.g., a gas or electric heating device) may be provided to provide for heating during certain conditions (e.g., winter operation), and could also be controllable by the controller 38A.

A low pressure device 51 is in communication with the controller 38A and is operable to respond to refrigerant low pressure condition in the suction line 29 if the refrigerant has fallen beneath a predefined low pressure threshold. The low pressure device 51 could be a switch configured to changed states in response to the pressure falling below a predefined low pressure threshold (e.g., turn ON or OFF in response to such a condition), or could be a sensor (e.g., a pressure transducer) operable to provide a sensor reading indicative of the pressure value, for example.

A high side pressure sensor 52, liquid line pressure transducer 53, temperature sensor 54, and temperature sensor 55 are also each in communication with the controller 38A. The high side pressure sensor 52 is operable to measure a pressure of refrigerant entering the first heat exchanger 24A from the compressor 22A. The liquid line pressure transducer 53 is operable to measure a pressure of refrigerant existing the first heat exchanger 24A on its way to the expansion device 26A. The temperature sensor 54 is operable to measure a temperature of refrigerant between the first heat exchanger 24A and expansion device 26A. The temperature sensor 55 is operable to measure a temperature of refrigerant between the second heat exchanger 24B and the compressor 22A.

The controller 38A is operable to use input from the sensors 53, 54 to determine a subcooling temperature of the air temperature conditioning system 20A, based on a difference between a temperature of refrigerant leaving the first heat exchanger 24A and a saturation bubble point for the refrigerant.

Alternatively, or in addition to being able to determine the subcooling temperature, the controller 38A is operable to use input from the sensors 55, 51 to determine a superheating temperature of refrigerant entering the compressor 22 of the air temperature conditioning system 20A, based on a difference between a temperature of refrigerant entering the compressor 22 and a refrigerant saturation dewpoint.

During a normal cooling cycle of an air temperature conditioning system, a return fluid flow (e.g., airflow) flows into the air temperature conditioning system through a refrigeration inlet, and across the heat exchanger via a fan, thus cooling the return fluid flow. Once cooled, the return fluid flow becomes supply fluid flow and is supplied through an outlet of the air temperature conditioning system. The fluid flow may be any suitable fluid in a gaseous state.

During a normal cooling cycle, a working fluid that may be a coolant or refrigerant flows through a line between the various components. Before entering a heat exchanger, the working fluid traverses the heat exchanger expansion valve, such as, for example, an electronic expansion valve or a thermostatic expansion valve, and expands to a lower pressure and a lower temperature before entering the heat exchanger. As the liquid working fluid traverses the heat exchanger, the liquid working fluid passes in heat exchanging relationship with a heating fluid (e.g., ambient air) whereby the liquid working fluid is evaporated and typically superheated to a desired degree. The low pressure vapor working fluid leaving the heat exchanger passes through a line to a suction inlet of a compressor. The working fluid may be any suitable substance that may be capable of undergoing phase transitions from a liquid to a gas and back again. Such working fluids may include fluorocarbons, ammonia, sulfur dioxide, hydrocarbons, carbon dioxide and others.

The heating fluid may be air drawn by an associated fan(s) from a climate controlled environment, such as a building comfort zone associated with an air conditioning system, to be cooled, and generally also dehumidified, and thence returned to a climate controlled environment.

Referring to FIG. 2, the heat exchanger 24 may be an air-cooling heat exchanger having tubes 50 that facilitate the working fluid 57 flow. In operation, a fluid flow (see arrow 58) moves across the heat exchanger 24 and heat is transferred from the air into the flowing working fluid 57. With the absorption of heat, the working fluid 57 may evaporate inside the tubes 50.

The disclosed heat exchanger includes an adsorbent 56 on at least a portion of an exterior heat transfer surface of the heat exchanger. The adsorbent 56 may adsorb moisture, carbon dioxide, VOCs, or a combination thereof from air 58 being treated.

The exterior heat transfer surface of the heat exchanger can be roughened to promote adhesion of the adsorbent 56 thereto. The adsorbent can be in particle form and a binder can be added to the adsorbent particles to promote adhesion of the adsorbent 56 to the exterior heat transfer surface of the heat exchanger without blocking pores of the adsorbent material. The adsorbent 56 can be grown on the exterior heat transfer surface of the heat exchanger though hydro-thermal synthesis.

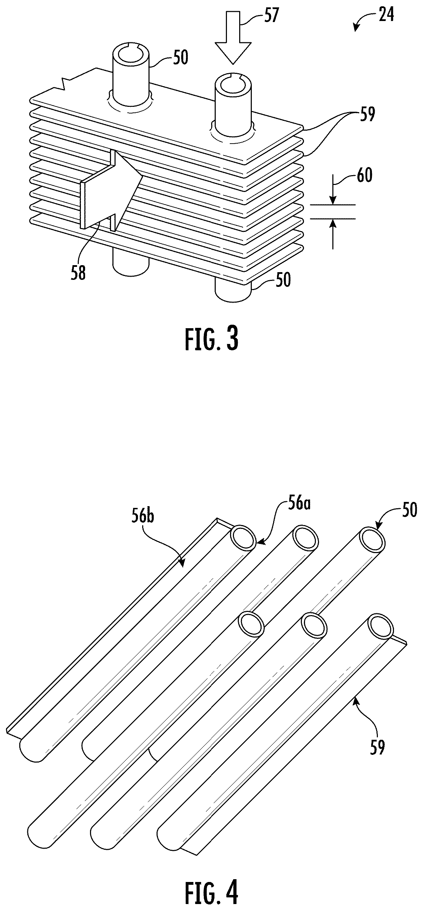

Referring to FIG. 3, the heat exchanger 24 may have a multitude of fins 59 secured to the exterior of the tubes 50. The heat exchanger 24 further includes a fin pitch (i.e., fin density) that may be represented by the number of fins per inch (see arrow 60).

Referring to FIG. 4, the adsorbent 56 may be present as a coating 56a on the tubes 50, as a coating 56b on the fins 59, or a combination thereof. The fins 59 can have any suitable geometry, e.g., corrugations, to promote heat transfer, increase an area on which the adsorbent can be coated, or a combination thereof.

Exemplary adsorbents include, for example, silica, activated alumina, zeolites such as NaX and NaY zeolites, porous organic polymers, and metal organic frameworks (MOFs). The zeolite may be a faujasite with varying Si/Al ratios, for example, 1.3 or 2.4. The zeolite may offer large microporosity and macroporosity, due respectively to crystalline structure, with different types of cavities (for example, sodalite β-cages and supercages), and to the binder. The adsorbent, for example, silica or activated alumina, may be amorphous and also polar, and may be essentially mesoporous. The adsorbent can also be a microwave adsorber, depending on the wavelength of the microwave.

The flowing working fluid 57 carries away heat of adsorption to sustain adsorption and reach a high usable capacity of the adsorbent, minimizing an amount of adsorbent needed for the process. The adsorbent has a certain adsorption capacity (e.g., gram adsorbate/gram adsorbent material). Adsorption of adsorbate, e.g., contaminant, by the adsorbent stops when that adsorption capacity of the adsorbent is reached. The adsorption capacity depends on temperature and the adsorbate vapor pressure. When the adsorption capacity of the adsorbent is reached, the adsorbent is regenerated. After regeneration, the adsorbent is ready for another cycle of adsorption. The present disclosure teaches a process of regenerating the adsorbent 56 by heating the adsorbent 56 using microwave heating.

The heat exchanger, e.g., tube 50, may have a high heat capacity. For example, heat exchanger, e.g., tube 50, may include a metal. It would be desirable to regenerate the adsorbent without heating the heat exchanger, e.g., tube 50, with the microwaves of the microwave heating being absorbed by the adsorbent and not heating or penetrating the heat exchanger, e.g., tube 50. Renewable electricity may be used to power a microwave generator supplying the microwaves.

The temperature capable of regenerating the adsorbent 56 may be within a range of, for example, about 50 °C to 200 °C for a period of time (e.g., about one to one hundred minutes). Appropriate selection of the microwave operating conditions, microwave mode, or a combination thereof can provide heating to the adsorbent but not the tube 50. The adsorbent can have a low thermal conductivity as compared to, for example, tube 50, which can enable heating of the adsorbent before heating of tube 50. Adsorbent is regenerated during heating of adsorbent. Exemplary microwave operating conditions include, for example, use of a magnetron functioning at 2.45 gigahertz with a maximal power of 1,950 watts.

Microwave absorbing materials can also be present on at least a portion of the exterior heat transfer surface of the heat exchanger. Exemplary microwave absorbing materials include magnetic loss powders such as cobalt, nickel, and ferrite; loss of dielectric loss materials such as conductive polymers and carbon nanotubes (CNTs); carbon-based materials such as graphite, diamond, graphene, buckminsterfullerene, and carbon nanotubes; conductive polymers such as polyaniline, polythiophene, polypyrrole, and polydopamine; and metal oxides nanomaterials such as aluminum oxide (Al₂O₃), zinc oxide (ZnO), and titanium oxide (TiO₂).

A microwave absorbing material can be mixed with adsorbent to enhance the microwave absorption properties of the adsorbent. The microwave absorbing material can also be distributed unevenly, for example, close to or farther away from the heat exchanger surface.

A metallic mesh may be used to prevent microwaves from propagating outside a microwave cavity in which the heat exchanger is located during adsorbent regeneration.

The adsorbents may be operated in a cyclical mode between stages of adsorption and desorption. During regeneration, desorbed gases may be captured for further processing. The desorption of some gases may be accelerated through competitive adsorption between adsorbents with a different gas collected during a desorption step. For example, collected CO₂, if the stronger adsorbent, may be used to desorb H₂O, the weaker adsorbent.

A process for operating an air-temperature conditioning system including a heat exchanger as disclosed herein can include flowing contaminated air over a heat exchanger, which includes an adsorbent on at least a portion of the exterior heat transfer surface thereof, located in a microwave cavity. Contaminant is adsorbed on the adsorbent, and clean, processed air can be removed from the microwave cavity. At least a portion of the processed air can be supplied to a building, for example.

At least a portion of the processed air can be supplied to heat exchangers including adsorbent to be regenerated. Microwaves can be supplied to a microwave cavity containing the heat exchangers including adsorbent to be regenerated. The adsorbent to be regenerated absorbs microwave radiation and contaminants can be desorbed from the adsorbents. A flow of air containing desorbed contaminants can be removed from the microwave cavity.

After operation, contaminant is adsorbed on adsorbent of the heat exchanger being used to process air and contaminant is desorbed from adsorbent of the regenerated heat exchanger. The air flow can then be reversed such that the contaminated heat exchanger can be regenerated, and the regenerated heat exchanger can process air.

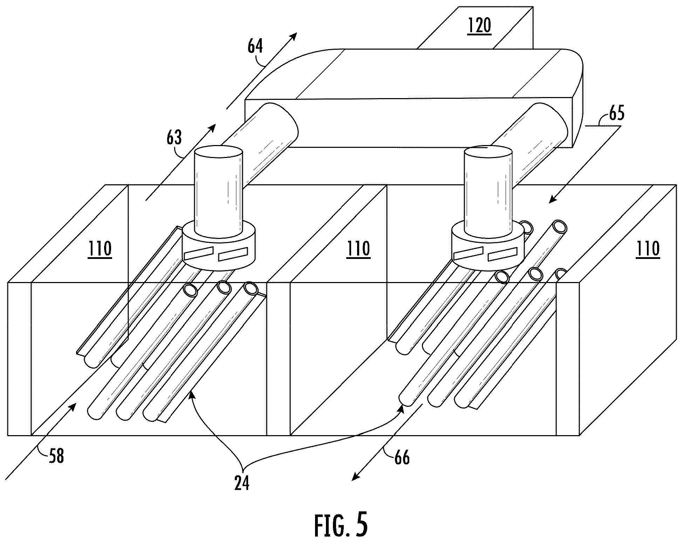

Referring to FIG. 5, a flow of contaminated fluid, e.g., air, moves across the heat exchanger 24, e.g., refrigerant tube bundles with fins coated with adsorbent inside microwave cavities. The microwave cavities are separated and bounded by walls 110. Metallic mesh(es) can be present where the contaminated air 58, the processed air 63, the portion of the processed air to regenerate adsorbent 56, and the flow 66 of air with desorbed contaminants enter and exit the microwave cavities with the adsorbent coated heat exchangers.

Contaminants can be adsorbed on adsorbent coated on the heat exchanger 24. Microwaves are not supplied to the microwave cavity into which the contaminated fluid is flowed. Clean, processed air 63 can be removed from the microwave cavity. At least a portion of the processed air 63 can be supplied to a building 64, for example.

At least a portion 65 of the processed air can be supplied to heat exchangers including adsorbent to be regenerated. Microwaves can be supplied to a microwave cavity containing the heat exchangers including adsorbent to be regenerated. A waveguide 120 can direct electromagnetic waves from a microwave source to the microwave cavity. The adsorbent absorbing microwave radiation can cause desorption of contaminants from the heat exchanger 24. A flow 66 of fluid, e.g., air, containing desorbed contaminants can be removed from the microwave cavity.

A first section of heat exchanger 24 in a second microwave cavity is under microwave radiation during regeneration while a second section of heat exchanger 24 in a first microwave cavity is adsorbing impurities out of the air. The waveguide 120 can direct microwaves in a cyclical fashion between the sections of adsorbent coated heat exchanger 24. For example, the waveguide can direct microwave energy to the second section of adsorbent coated heat exchanger 24 in a second microwave cavity for regeneration while the first section of heat exchanger 24 in a first microwave cavity adsorbs the impurities in a cyclical fashion.

Adsorbing contaminant by the adsorbent can include limiting, e.g., preventing, microwaves generated by the microwave generator from being supplied to the heat exchanger, for example, through use of the waveguide 120. Adsorption and regeneration can occur in a cyclical fashion with a frequency dictated by impurity amount, adsorbent amount, adsorbent capacity, the time to regenerate the adsorbent with microwaves, or a combination thereof.

Accordingly, an air-temperature conditioning system can include a heat exchanger as disclosed herein and a microwave generator. The air-temperature conditioning system can further include a microwave cavity including a metallic mesh configured to prevent microwaves from propagating outside the microwave cavity.

In the air-temperature conditioning system, the heat exchanger can be an evaporator coil of the air-temperature conditioning system, and impurities can be removed when a heat pump of an air-temperature conditioning system operates as an air conditioning (AC) unit. The air temperature conditioning system can further include a working fluid line configured to flow the working fluid through the interior volume of the heat exchanger. Impurities can be removed when a heat pump of an air-temperature conditioning system adds heat to the air stream, and the adsorbent coated heat exchanger would be a condensing coil of the air-temperature conditioning system (i.e., when in heat pump mode).
While the present invention is described with reference to exemplary embodiments, it will be understood by those skilled in the art that various changes may be made and equivalents may be substituted without departing from the scope of the present invention as defined by the appended claims. The terms "a" and "an" and "the" herein do not denote a limitation of quantity, and are to be construed to cover both the singular and the plural, unless otherwise indicated herein or clearly contradicted by context. In addition, various modifications may be applied to adapt the teachings of the present invention to particular situations, applications, and/or materials, without departing from the essential scope thereof. The present invention is thus not limited to the particular examples disclosed herein, but includes all embodiments falling within the scope of the appended claims.

## Claims

1. A process for regenerating an adsorbent (56), the process comprising:
generating microwaves using a microwave generator; and
selectively applying the microwaves to the adsorbent located on an exterior heat transfer surface of a heat exchanger (24) located in a microwave cavity to heat and regenerate the adsorbent within the microwave cavity.

2. The process according to claim 1, wherein the exterior heat transfer surface of the heat exchanger (24) further comprises a microwave absorbing material.

3. The process according to claims 1 or 2, wherein the exterior heat transfer surface of the heat exchanger comprises a plurality of fins (59).

4. The process according to any of claims 1 to 3, wherein the microwave cavity further comprises a metallic mesh configured to prevent microwaves from propagating outside the microwave cavity, and/or further comprising using competitive adsorption between adsorbents (56).

5. An air-temperature conditioning system (20A) comprising:
a heat exchanger (24) comprising
an interior volume configured to flow a working fluid (57) therethrough,
an exterior heat transfer surface, and
an adsorbent (56) on at least a portion of the exterior heat transfer surface; and
a microwave generator.

6. The air-temperature conditioning system (20A) according to claim 5, further comprising a microwave cavity comprising a metallic mesh configured to prevent microwaves from propagating outside the microwave cavity.

7. The air temperature conditioning system (20A) according to claims 5 or 6, further comprising a working fluid line configured to flow the working fluid (57) through the interior volume of the heat exchanger (24).

8. The air temperature conditioning system (20A) according to any of claims 5 to 7, wherein the heat exchanger (24) further comprises a microwave absorbing material on at least a portion of the exterior heat transfer surface, and optionally wherein the adsorbent (56) and microwave absorbing material are present as a mixture.

9. A method of operating the air temperature conditioning system according to any of claims 5 to 8, the method comprising:
adsorbing contaminant by the adsorbent by flowing contaminated fluid over the heat exchanger (24); and
after adsorbing contaminant by the adsorbent (56), desorbing contaminant adsorbed by the adsorbent by applying microwaves generated by the microwave generator to the adsorbent.

10. The method of claim 9, comprising repeating the adsorbing and the desorbing.

11. The method of claim 9 or 10, wherein adsorbing contaminant by the adsorbent (56) comprises limiting microwaves generated by the microwave generator from being supplied to the heat exchanger (24).

12. The method of claim 9 or 10, wherein adsorbing contaminant by the adsorbent (56) comprises preventing microwaves generated by the microwave generator from being supplied to the heat exchanger (24), and
optionally wherein:
the air-temperature conditioning system (20A) further comprises a waveguide (120); and
the method further comprises using the waveguide to prevent the microwaves generated by the microwave generator from being supplied to the heat exchanger (24).

13. The method according to any of claims 9 to 12, wherein a frequency of the adsorbing and the desorbing is based on impurity amount, adsorbent amount, adsorbent capacity, the time to regenerate the adsorbent (56) with microwaves, or a combination thereof.

14. A heat exchanger (24) comprising:
an interior volume configured to flow a working fluid (57) therethrough;
an exterior heat transfer surface;
an adsorbent (56) on at least a portion of the exterior heat transfer surface; and
a microwave absorbing material on at least a portion of the exterior heat transfer surface.

15. The heat exchanger (24) according to claim 14, wherein the exterior heat transfer surface of the heat exchanger comprises a plurality of fins (59), and/or wherein the adsorbent (56) and microwave absorbing material are present as a mixture.
